# EUROPÄISCHE PATENTANMELDUNG

(11) **EP 0 829 674 A1**
(43) Veröffentlichungstag der Anmeldung: **18.03.1998**
(21) Anmeldenummer: 96114699.0
(22) Anmeldetag: 13.09.1996
(51) Int. Cl.: F16L 55/033

(54) **Körperschalldämmende Beschichtung von Abwasserrohren und -formstücken aus Kunststoff**

(71) Anmelder: Krammel, Werner Johann, 93077 Bad Abbach (DE)
(72) Erfinder: Krammel, Werner Johann, 93077 Bad Abbach (DE)

(57) **Zusammenfassung**

Körperschalldämmende Beschichtung für Abwasserrohre- und formstücke aus Kunststoff, insbesondere aus Polypropylen PP oder Polyethylen PE, die mit einem Schaumstoff (2) aus Polyurethan, der eine Schichtdicke von bis zu 60mm aufweist, und mit einer wasser- oder wasserdampfundurchlässgen Schicht (3) ummantelt ist.

## Beschreibung

Bekannt ist, daß Abwasserrohrsysteme, die aus Kunststoff hergestellt sind, zur Entwässerung von Abwasser in Gebäuden dienen.
Bekannt ist auch, daß Abwasserrohre, durch das in vertikaler und horizontaler Richtung beschleunigte Abwasser, in Schwingung versetzt werden. Durch den direkten Kontakt von Abwasserrohr mit den Wänden, Decken des Gebäudes werden diese Schwingungen auf den Baukörper übertragen. Der dadurch entstehende Körperschall wird als störender Luftschall vom Gebäude an die Umgebung, insbesondere an die Räume abgegeben.
Dieser Umstand verursacht einen hohen Geräuschpegel in Wohnräumen, der zu einer erheblichen Wertminderung von Wohneigentum führt. Diese Art der Lärmbelästigung zählt zu den häufigsten Baumängeln im Wohnungsbau.
Aus den vorgenannten Gründen wird in verschiedenen länderspezifischen Normen und Vorschriften eine wirksame Körperschalldämmung für die Entsorgung von Abwasser in Gebäuden gefordert.

Um eine wirksame Körperschalldämmung zwischen Abwasserrohrsystem und Baukörper zu erzielen, werden verschiedene Methoden oder Verfahren angewandt. Zum einen werden Abwasserrohre mit Dämmschläuchen, Abwasserrohrformstücke mit Dämmbändern isoliert. Derartige Dämmschläuche- und bänder werden aus künstlichen Fasern oder Polymeren hergestellt.
Diese Art der nachträglich montierten Körperschalldämmung behindert vor allem eine zuverlässige Ausführung, insbesondere an schwer zugänglichen Abwasserrohren- und formstücken in Deckendurchbrüchen oder Mauerwerksschlitzen. Oftmals werden auch Hände und Handrücken, aufgrund der beengten Einbausituation, durch Kratzer oder Rißwunden verletzt. Aber auch die komplizierte Form der Abwasserrohrformstücke erschweren eine körperschallgerechte Isolierung. Durch die oftmals mangelhafte Ausführung der nachträglich aufgebrachten Isolierung entstehen sog. Körperschallbrücken, die eine erhöhte Lärmbelästigung in Räumen verursachen. Kennzeichend für diese Isoliersysteme ist die Trennung zwischen Abwasserrohr und Isolier-bzw. Dämmmaterial sowie deren nachträgliche Montage.

Zum anderen wurden Abwasserrohrwerkstoffe entwickelt, die aus einem ein- oder mehrschichtigen Kunststoff aufgebaut sind. Die Innenschicht zeichnet sich durch eine hohe Temperaturbeständigkeit aus. Die Außenschicht trägt durch ihren Aufbau und ihre Struktur zur Körperschalldämmung im Rohrwerkstoff bei. Diese Technik reduziert die Schallabstrahlung an den Baukörper. Trotz dieser Technik ist es notwendig, diese Abwasserrohrsysteme durch eine geeignete Körperschalldämmung nachträglich zu isolieren.

In einem weiteren Verfahren wird der Abwasserrohrwerkstoff durch einen synthetischen Elastomer beschichtet, um die körperschalldämmenden Eigenschaften der Abwasserrohrwerkstoffs zu verbessern. Diese Ummantelung bestehen aus kautschukähnlichen Materialien mit einer Härte von 30 bis 90 Shore A. Kennzeichend für dieses Abwassersystem ist, daß diese sehr teuer in der Herstellung sind, als herkömmliche Abwasserrohrsysteme. Auch der erhöhte Montageaufwand vor Ort ist als nachteilig anzusehen. Auch hier wird eine nachträgliche Körperschallisolierung von den Herstellern empfohlen.

Der Erfindung liegt daher die Aufgabe zugrunde, ein einbaufertiges Abwasserrohr zur Entsorgung von Abwasser in Gebäuden zu entwickeln, deren Körperschalldämmung auf den Abwasserrohrwerkstoff werkseitig aufgebracht ist und eine schnelle, einfache und sichere Montage vor Ort und eine günstige Herstellung des Abwasserrohrsystems erlauben.

Diese Aufgabe wird erfindungsgemäß dadurch gelöst, daß ein Abwasserrohr (1) aus Kunststoff verwendet wird, das mit einer körperschalldämmenden Beschichtung aus Polyurethan-Schaum (2) und einer wasserundurchlässigen Schicht (3), bestehend aus PVC, Auminiumfolie oder Kautschuk, ummantelt ist.

Erfindungsgemäße Abwasserohre erlauben eine einfache und schnelle Montage vor Ort, auch unter schwieriger Einbausituation. Durch die werkseitig aufgebrachte körperschalldämmmende Beschichtung werden Montagefehler und die etwaige Entstehung von Körperschallbrücken auf ein Minimum reduziert. Eine nachträgliche Dämmung der Abwasserrohre ist daher nicht mehr notwendig. Die Kombination des Abwasserrohrwerkstoffs Polypropylen PP oder Polyethylen PE mit der werkseitigen Beschichtung aus Polyurethan-Schaum erlauben eine kostengünstige Herstellung.

Außerdem kann mit einfachen Werkszeugen z.B einem Messer die Körperschalldämmung aus Polyurethan-Schaum einfach abgeändert werden, da der Polyurethan-Schaum mit dem Abwasserwerkstoff Polypropylen und Polyethylen keine chemische Verbindung eingeht. Desweiteren zeichnet sich die Beschichtung mit Polyurethan-Schaum durch eine hervorragende Körperschalldämmung aus.
Durch eine entsprechende Gestaltung der Ummantelung werden Montagefehler im Hinblick auf die Entstehung von Körperschallbrücken auch bei der Kombination von Abwasserrohre mit Abwasserformstücken wie z.B. Abzweige, Bögen, Reduzierungen auf ein Minimum reduziert.

Als Material werden Abwasserrohre- und formstücke aus Polypropylen PP oder Polyethylen PE verwendet. Diese Abwasserrohre- und formstücke werden mit einem Schaum aus Polyurethan werkseitig beschichtet. Der verwendete Polyurethanschaum weist

| | |
|---|---|
| eine Schichtdicke von bis zu 60mm, | |
| eine Rohdichte von 10 bis 100g/Liter, | nach DIN 53420 |
| eine Druckfestigkeit von 0.1 bis 0.9 N/mm^2, | nach DIN 53421 |
| eine Biegefestigkeit von 0.10 bis 0.9 N/mm^2 | nach DIN 53423 |
| Wasseraufnahme in 24 Stunden vom 1.0 bis 5.0 Vol-% | nach DIN 53433 |
| eine Geschlossenzelligkeit von 70 bis 97% | |
| eine Wasserdampfdiffusionszahl von 20 bis 100 | nach DIN 52615 |
| Brennbarkeit von B1, B2 und B3 | nach DIN 4102 |

auf.

Vorzugsweise weist die Beschichtung aus Polyurethan-Schaum,

| | |
|---|---|
| eine Schichtdicke von 3 bis 15mm, | |
| eine Rohdichte von 35 bis 55 g/Liter, | nach DIN 53420 |
| eine Druckfestigkeit von 0.2 bis 0.4 N/mm^2, | nach DIN 53421 |
| eine Biegefestigkeit von 0.40 bis 0.60 N/mm^2 | nach DIN 53423 |
| Wasseraufnahme in 24 Stunden vom 1.5 bis 3.0 Vol-% | nach DIN 53433 |

auf.
Abschließend wird die Beschichtung aus Polyurethan-Schaum mit einer wasser- oder wasserdampfundurchlässgen Schicht ummantelt. Diese wasser- oder wasserdampfundurchlässige Schicht kann aus einer Aluminiumfolie, einer vorgefertigten PVC-Schale oder einer Schicht aus natürlichen oder synthetischen Kautschuk bestehen.

Im folgenden wird ein Ausführungsbeispiel der Erfindung anhand von Zeichnungen näher erläutert. Es zeigen
- Figur 1: eine Querschnittsdarstellung Abwasserrohr
- Figur 2: eine Schnittdarstellung Abwasserrohrformstück
- Figur 3: eine Schnittdarstellung Abwasserrohr
- Figur 4: eine Darstellung Abwasserrohr

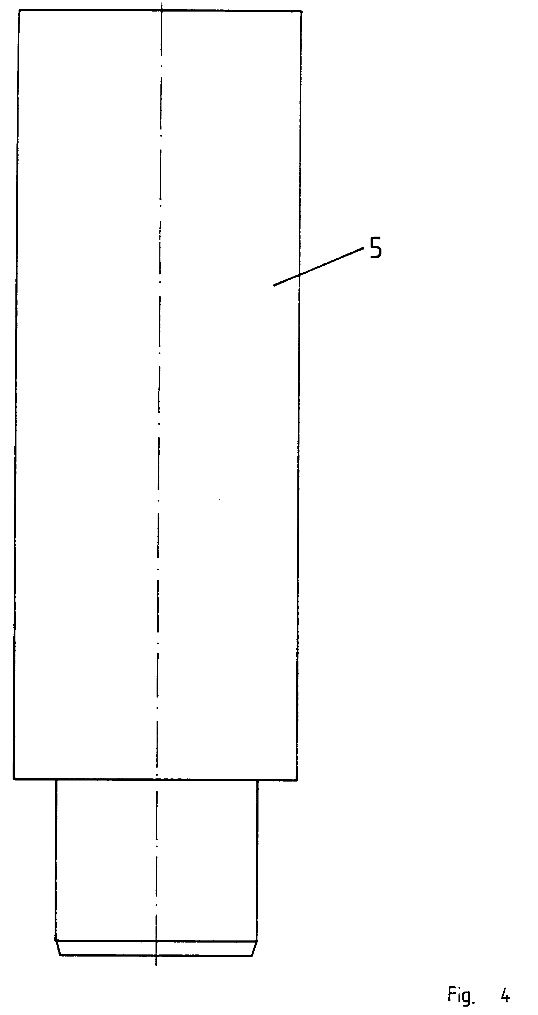

- Figur 4: eine Darstellung Abwasserformstück

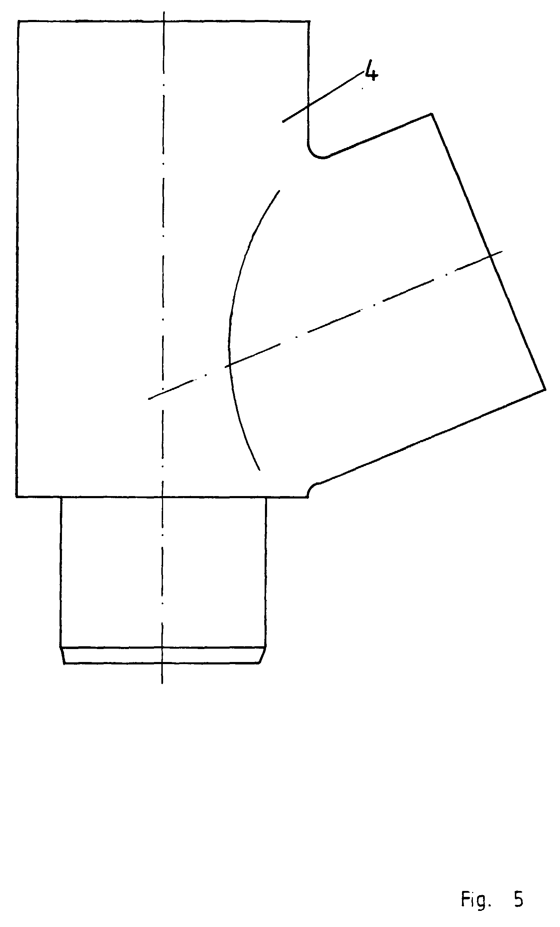

- Figur 5: eine Darstellung Einbausituation Abwasserrohrsystem

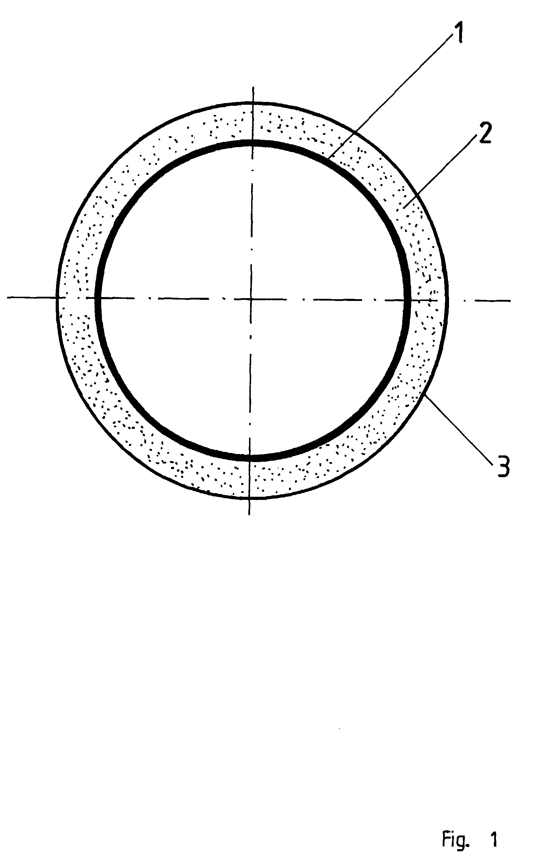

- Figur 1: zeigt einen Querschnitt durch ein Abwasserrohr (1) aus Polypropylen oder Polyethylen, das mit einem Polyurethan-Schaum (2) beschichtet und einer wasserundurchlässigen Oberfläche (3) ummantelt ist.

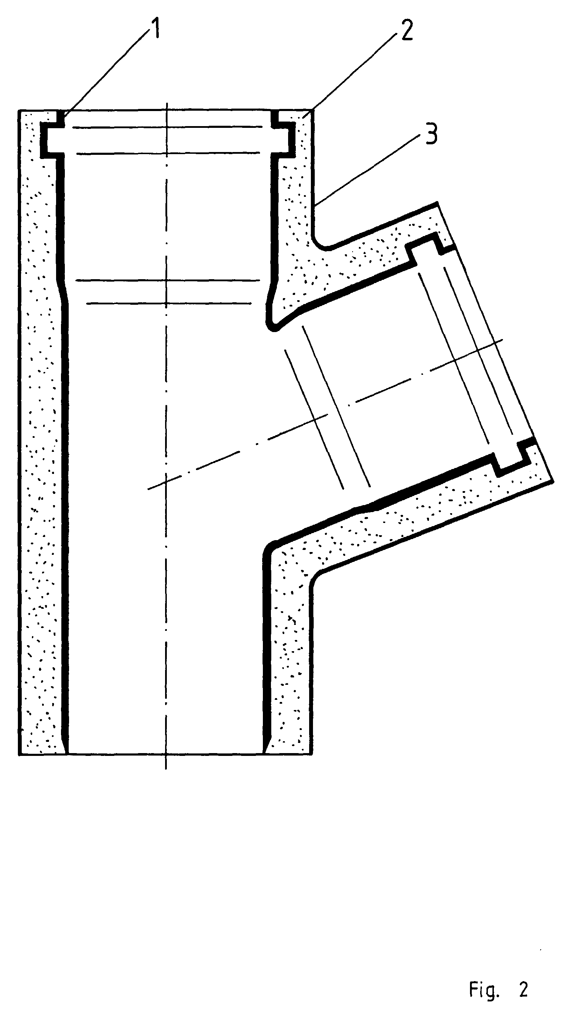

- Figur 2: zeigt eine Schnittdarstellung durch ein Abwasserohrformstück (1) aus Polypropylen oder Polyetyhlen, das mit einem Polyurethanschaum (2)ummantelt und einer wasserundurchlässigen Oberfläche (3) beschichtet ist.

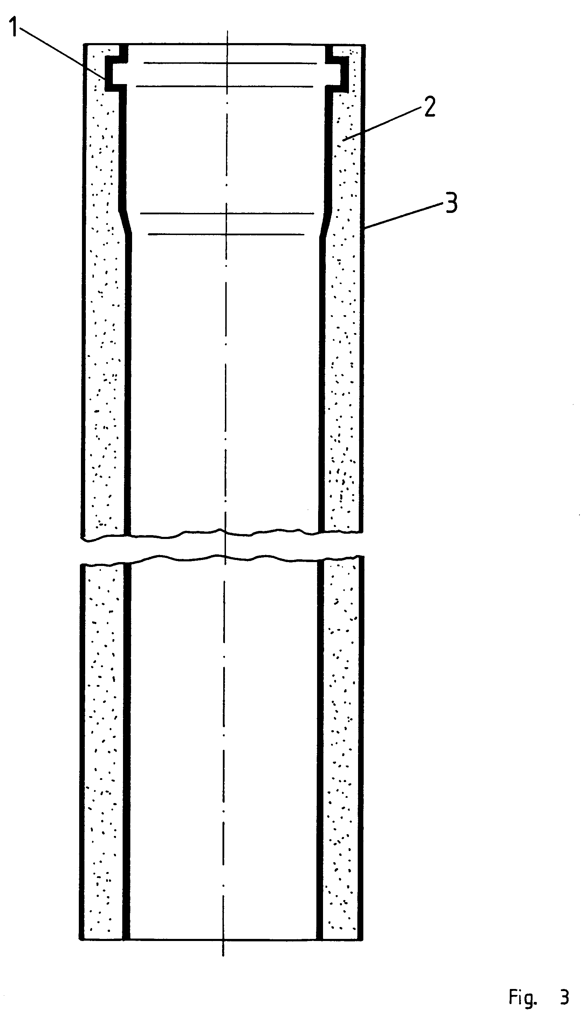

- Figur 3: zeigt eine Schnittdarstellung durch ein Abwasserrohr (1) aus Polypropylen oder Polyethylen, das mit einem Polyurethanschaum (2) ummantelt und einer wasserundurchlässigen Oberfläche (3) beschichtet ist.
- Figur 4: zeigt eine Darstellung eines Abwasserrohres im einbaufertigen Zustand.
- Figur 5: zeigt eine Darstellung eines Abwasserrohrfomstückes im einbaufertigen Zustand.

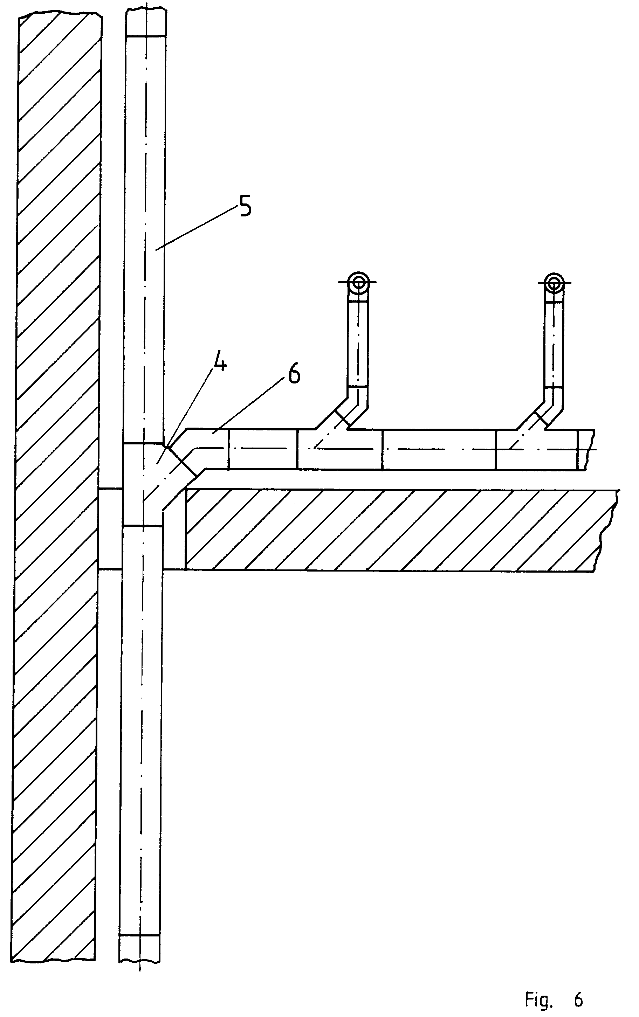

- Figur 6: zeigt eine typische Einbausituation von Abwasserrohrsystemen Gebäuden. In dieser Darstellung wird deutlich, mit welchen zeitlichen und körperlichen Aufwand eine nachträglich montierte Körperschalldämmung besonders im Bereich des Deckendurchbruches verbunden ist. Durch die werkseitig aufgebrachte körperschalldämmende Beschichtung können die Abwasserrohre- und formstücke einbaufertig montiert werden.

## Patentansprüche

1. Körperschalldämmende Beschichtung für Abwasserrohre- und formstücke aus Kunststoff, dadurch gekennzeichnet, daß die Abwasserrohre-und formstücke (1) aus Polypropylen PP oder Polyethylen PE hergestellt sind, die mit einem Schaumstoff (2) aus Polyurethan, der
eine Schichtdicke von bis zu 60 mm,
eine Rohdichte von 10 bis 100 g/Liter,
eine Druckfestigkeit von 0.1 bis 0.9 N/mm^2,
eine Biegefestigkeit von 0.10 bis 0.9 N/mm^2
Wasseraufnahme in 24 Stunden vom 1.0 bis 5.0 Vol-%
eine Geschlossenzelligkeit von 70 bis 97%
eine Brennbarkeitsklasse von B1, B2 und B3 nach DIN 4102
aufweist und mit einer abschließenden wasser- oder wasserdampfundurchlässigen Schicht (3) ummantelt ist.

2. Abwasserrohre- und formstücke nach Anspruch 1, dadurch gekennzeichnet, daß die Beschichtung (2) aus Polyurethan-Schaum eine Schichtdicke von 3 bis 15 mm aufweist.

3. Abwasserrohre- und formstücke nach Anspruch 1, dadurch gekennzeichnet, daß die Beschichtung (2) aus Polyurethan-Schaum eine Rohdichte von 35 bis 55 g/Liter aufweist.

4. Abwasserrohre- und formstücke nach Anspruch 1 dadurch gekennzeichnet, daß die Beschichtung (2) aus Polyurethan-Schaum eine Druckfestigkeit von 0.2 bis 0.4 N/mm^2 aufweist.

5. Abwasserrohre- und formstücke nach Anspruch 1 dadurch gekennzeichnet, daß die Beschichtung (2) aus Polyurethan-Schaum eine Biegefestigkeit von 0.40 bis 0.60 N/mm^2 aufweist.

6. Abwasserrohre- und formstücke nach Anspruch 1, dadurch gekennzeichnet, daß die Beschichtung (2) aus Polyurethan-Schaum eine Wasseraufnahme in 24 Stunden von 1.5 bis 3.0 Vol-% aufweist.

7. Abwasserrohre- und formstücke nach Anspruch 1, dadurch gekennzeichnet, daß die abschließende wasser -oder wasserdampfundurchlässige Schicht (3) aus einer Aluminiumfolie oder einer PVC-Formschale besteht.

8. Abwasserrohre- und formstücke nach Anspruch 1, dadurch gekennzeichnet, daß die abschließende wasser -oder wasserdampfundurchlässige Schicht (3) aus natürlichen oder synthetischen Kautschuk, mit einer Dicke von bis zu 3 mm, besteht.

9. Abwasserrohre- und formstücke (4, 5,) nach Anspruch 1 bis 8, dadurch gekennzeichnet, daß am Rohrende die Beschichtung abgesetzt ist.

10. Abwasserrohre- und formstücke nach Anspruch 1 bis 9, dadurch gekennzeichnet, daß die Abwasserrohre- und formstücke (4, 5, 6,) im montierten Zustand eine geschlossene Ummantelung aufweist.
